Europäisches Patentamt

European Patent Office

Office européen des brevets

(19)

(11) Publication number: **0 398 518**
**A2**

# EUROPEAN PATENT APPLICATION

(12)

(21) Application number: 90304385.9

(22) Date of filing: 24.04.90

(51) Int. Cl.5: **G03B 21/28**

(30) Priority: 25.04.89 JP 105048/89
27.04.89 JP 108418/89
06.11.89 JP 288132/89
01.02.90 JP 23462/89

(43) Date of publication of application:
**22.11.90 Bulletin 90/47**

(84) Designated Contracting States:
**DE FR GB**

(71) Applicant: **SEIKO INSTRUMENTS INC.**
31-1, Kameido 6-chome Koto-ku
Tokyo 136(JP)

(72) Inventor: **Nakano, Yuko, c/o Seiko Iconix
Corporation**
31-1 Kameido, 6-chome
Koto-ku, Tokyo(JP)
Inventor: **Ioka, Tsunejiro, c/o Seiko Iconix
Corporation**
31-1 Kameido, 6-chome
Koto-ku, Tokyo(JP)
Inventor: **Ishiyama, Keiichi, c/o Seiko Iconix
Corporation**
31-1 Kameido, 6-chome
Koto-ku, Tokyo(JP)

(74) Representative: **Miller, Joseph et al
J. MILLER & CO. Lincoln House 296-302 High
Holborn
London WC1V 7JH(GB)**

(54) Slide projector.

(57) A slide projector for projecting an image of a slide film (9) onto an image-receiving member (100), comprising holding means (7) for holding a slide film (9); a light source (3) for illuminating a slide film (9) held by said holding means (7); and first light directing means (10) for directing light from the slide film (9) onto a first region (P) of the image-receiving member (100) characterised by second light directing means (11A, 11B, 12A, 12B) for exposing at least one second region (W) of the image-receiving member (100) to light from said light source (3) which has not passed through said slide film (9).

FIG. 2

EP 0 398 518 A2

The present invention relates to a slide projector and, although the invention is not so restricted, it relates more particularly to a slide projector which is mounted on a photocopier and is used for obtaining a copy from a slide film.

The aspect ratio of the longitudinal length to the transverse length of a slide film is different from the aspect ratio of sheets of paper of regular sizes that are ordinarily used. Therefore, when an image of a slide film is copied in enlargement onto a sheet of paper, black colour portions not having any image thereon are unavoidably formed on either the longer side portions or the shorter side portions of the copying paper in order to fully copy the image. If there are such black colour portions which do not have an image around the copied image, they give a very bad impression. For this reason, the size of the image is generally reduced to be somewhat smaller than the size of the sheet of paper and the portions of the sheet outside the image range are made white. In a known slide projector for a photocopier, a special light source is provided in order to form the white colour portions around the copied image.

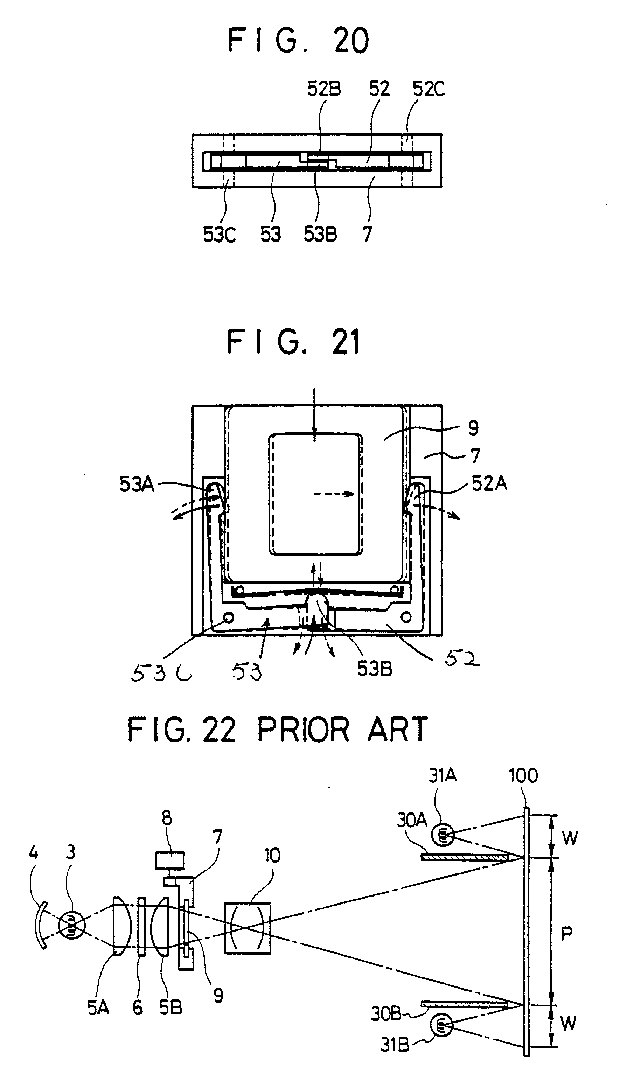

A known slide projector is shown in Figure 22. As shown therein, the image of a slide film 9 held in a slide holder 7 is projected onto a phosensitive film 100 by a halogen lamp 3, an optical condensing system consisting of a reflector 4. condenser lenses 5A, 5B and a heat ray absorption filter 6, and a projection lens 10. The photosensitive film 100 has microcapsules encapsulating a photosensitive composition and chromogenic material in the internal phase. The film 100 is image-wise exposed and subjected to a uniform rupturing force, whereby the microcapsules rupture and image-wise release the internal phase. US-A-4,399,290 and US-A-4,440,846 (Mead Corporation) describe the photosensitive film. Portions W, W of the photosensitive film 100 outside an image range P are exposed by special light sources, i.e. light sources 31A and 31B. Reference numerals 30A and 30B represent shading members, which are disposed in order to prevent the rays of light from the white colour light sources 31A, 31B from irradiating the image range P. The portions W exposed to the rays of light from the white colour light sources 31A, 31B do not generate any colour in a subsequent development step and become white colour portions in the copied image. However, the known construction is not reliable if there is any breakage of a filament because special light sources for exposing the white colour portions are provided in addition to the light source for exposing the image.

Another known slide projector which is mounted on a copier of an original table fixed system has been used for obtaining a copy from a slide film. Since the projected image of the slide film is formed on the original table glass of the copier, the focus of a projection lens is adjusted while the projected image is being confirmed by eye. However, the projected image cannot be viewed easily by eye, so that it is desirable that the adjustment of the focal point should be made automatically. Although an automatic focus adjustment mechanism has already been put into practical application in a slide film fixed type projector, the automatic focus adjustment mechanism must be further simplified and made more compact for use in a slide film moving type projector because a special driving source and driving mechanism must be provided in order to move the projection lens or the slide film in the direction of the optical axis.

Another known slide projector which is mounted on a copier for obtaining a copy from a slide film has the disadvantage that if a user makes a copying operation without inserting a slide film, he cannot notice the absence of the slide film until an image sheet is discharged, and consequently, he must confirm by eye whether or not the slide film is inside the projector before use. However, this is difficult to do in practice.

Another known slide projector has a slide film holding part which is larger than the frame of the slide film so as to enable the slide film to be introduced into the holding part. This causes a gap between the slide film and the holding part when the slide film is placed in the latter. The slide film is usually not placed at the centre of the holding part and it may not be in the range of the projection from the light source. Consequently, the slide film may be so projected that a part of the image is displaced. The image is therefore copied with part of the image missing or so as to be out of centre on the paper.

According to the present invention, there is provided a slide projector for projecting an image of a slide film onto an image-receiving member comprising holding means for holding a slide film; a light source for illuminating a slide film held by said holding means; and first light directing means for directing light from the slide film onto a first region of the image-receiving member characterised by second light directing means for exposing at least one second region of the image-receiving member to light from said light source which has not passed through said slide film.

In its preferred from, the slide projector has optical means for guiding part of the light from a light source for exposing an image so as to form white colour portions on a photosensitive film.

In one preferred form of the present invention there is provided a slide film moving type projector which has an automatic focus adjustment means which does not involve a special driving source and driving mechanism and which moves the slide film in the direction of the optical axis.

In another preferred form, there is provided a slide projector which has an automatic sensing means for sensing the existence of a slide film, by photo-emitting and photo-sensing devices.

In yet another preferred form of the present invention, there is provided a slide projector which has a centering means in a slide holder to place a slide film at the center of the slide holder or in the range of the projection from the light source automatically.

The said second light directing means may comprise lens means for condensing light from said light source, and mirror means for reflecting light which has been condensed by said lens means onto the or each said second region.

There may be aperture means through which light from the light source passes to the lens means.

There may also be a second aperture means and second lens means through which the light reflected by the mirror means is directed onto the or each said second region.

Adjusting means may be provided for automatically adjusting the position of a slide film held by said holding means so as to ensure that the image thereof which is directed onto the image-receiving member is in focus.

The adjusting means may comprise illuminating means for directing light onto a slide film held by said holding means; measuring means for measuring the amount of light from the illuminating means which is reflected from the slide film; and moving means for moving said holding means towards and away from the light source in dependence upon the amount of light measured by the measuring means.

Detecting means may be provided for detecting whether a slide film is present in the holding means.

The detecting means may comprise illuminating means for directing light onto a slide film held by said holding means; and light responsive means responsive to light from the illuminating means which is reflected from the slide film.

Centering means may be provided for setting the slide film at the centre of the holding means. The centering means may also have a slide film engaging portions which are adapted to nip the slide film between them. The centering means may have a resilient portion which urges the slide film engaging portions towards each other.

According to another aspect of the present invention, there is provided a slide projector comprising holding means for holding a slide film, and means for projecting an image of a slide film held in the holding means onto an image-receiving member characterised by adjusting means for automatically adjusting the position of a slide film held by said holding means so as to ensure that the image thereof which is projected onto the image-receiving member is in focus.

According to yet another aspect of the present invention, there is provided a slide projector comprising holding means for holding a slide film and means for projecting an image of a slide film held in the holding means onto an image-receiving member characterised by detecting means for detecting whether a slide film is present in the holding means.

According to a further aspect of the present invention, there is provided a slide projector comprising holding means for holding a slide film, and means for projecting an image of a slide film held in the holding means onto an image-receiving member characterised by centering means for setting the slide film at the centre of the holding means.

The invention is illustrated, merely by way of example, in the accompanying drawings, in which:-

Figure 1 is a schematic sectional view of a slide projector mounted on a copier;

Figure 2 is a schematic illustration showing a first embodiment of a slide projector according to the present invention;

Figure 3 is an explanatory diagram showing a transfer sheet after copying;

Figure 4 is a schematic illustration showing a second embodiment of a slide projector according to the present invention;

Figure 5 is a schematic illustration showing a third embodiment of a slide projector according to the present invention;

Figure 6 is a sectional side view of a slide projector according to a fourth embodiment of the present invention;

Figure 7 is an enlarged view of an elongated apertured portion of a slide holder forming part of the embodiment of Figure 6;

Figures 8A to 8D illustrate respectively the positions of parts of the embodiment of Figure 6 during an automatic focusing operation;

Figure 9A is a diagram illustrating the relationship between the position of reflected light f employed in the embodiment of Figure 6 and the positions of two photo-detectors;

Figure 9B is a diagram illustrating changes in the output of the two photo-detectors of Figure 9A with respect to the displacement of a slide film;

Figure 10 is a block circuit diagram of an automatic focusing means and an automatic detection means for detecting the existence of a slide film in the embodiment of Figure 6;

Figure 11 is a perspective view of a slide holder employed in a fifth embodiment of the present invention;

Figure 12 is a sectional view taken substantially along the line A-A of Figure 11;

Figure 13 is a sectional view taken substantially along the line B-B of Figure 12;

Figure 14 is an exterior end view of a slide film which may be used in the embodiment of Figure 11;

Figure 15 is a diagram illustrating the exposure region in the case of a slide film placed out of centre in the slide holder shown in Figure 11;

Figure 16 is a diagram illustrating a transfer sheet after copying in the case of a slide film which has been placed out of centre in the slide holder as shown in Figure 15;

Figures 17 and 18 are views similar to Figure 13 but illustrating the centering of the slide holder;

Figure 19 is a sectional view of a slide holder used in a sixth embodiment of the present invention;

Figure 20 is a sectional view taken substantially along the line C-C of Figure 19;

Figure 21 is a view illustrating the centering of the slide holder shown in Figure 19; and

Figure 22 is a schematic view showing a slide projector of the prior art.

Terms such as "left" and "right", as used in the description below, are to be understood to refer to directions as seen in the accompanying drawings.

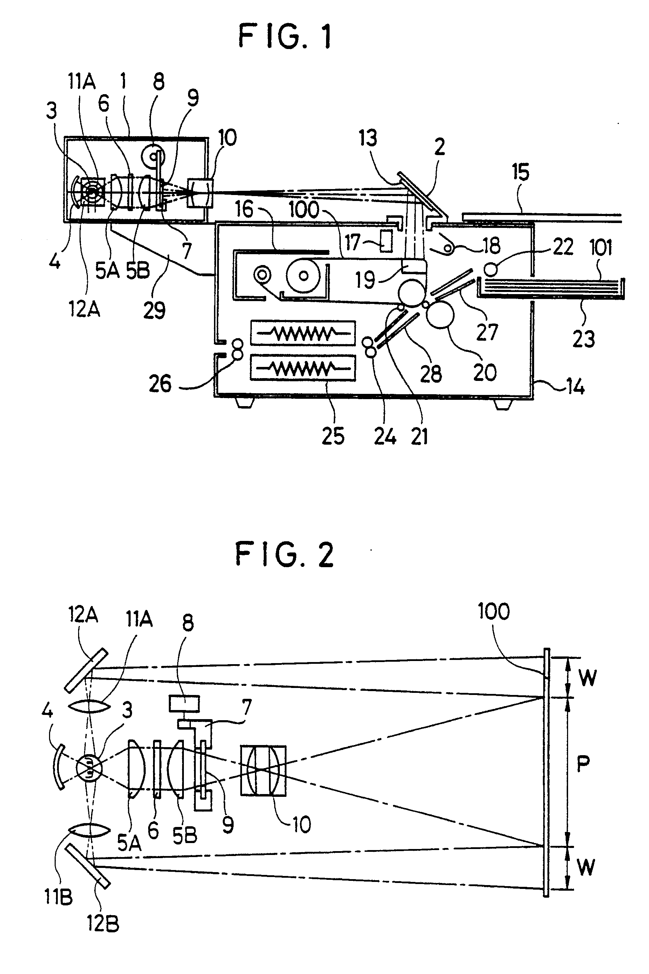

Referring first to Figure 1, a copier 14 shown in this embodiment is a copying machine of a photosensitive microcapsule system, and uses a photosensitive film 100 on which are dispersed and coated those microcapsules which contain pigment precursors and are sensitive to the rays of light of a specific wavelength so as to enable them to be cured. The system also uses one of a stack of transfer sheets 101 on which is coated a developer which reacts with the pigment precursors and generates the colours employed. A film cassette 16 stores the photosensitive film 100 described above, and takes up and recovers the used photosensitive film 100. While the photosensitive film 100 leaving the film cassette 16 is being transferred at a predetermined speed, it is exposed on an exposure table 19 and a latent image is thus formed. Thereafter, the exposed photosensitive film 100 and a transfer sheet 101 fed by a feeding roller 22 are superposed with each other and are strongly pressed together by a development roller 20. Accordingly, the microcapsules which are not cured at the time of exposure are ruptured and the pigment precursors flow out, react with the developer on the transfer sheet 101 and generate colours. Thereafter the transfer sheet 101 is transferred by a guide plate 28 and by a guide roller 24 and is heated when it passes through the inside of a heating unit 25. After coloration is thus promoted and lustering treatment is effected, the transfer sheet 101 is moved outside the machine by a discharge roller 26. A refractive index distribution rod lens array 17 is disposed above the exposure table 19 at the time of copying from an ordinary original and forms the image of the original placed on original table glass 15 on the photosensitive film 100. When a slide projector 1 is fitted, however, this lens array 17 is moved outside the exposure range as shown in Figure 1. The original table glass 15 is also moved to a position where it does not become an obstacle when a mirror unit 2 is fitted. The mirror unit 2 is removed from the copier 14 at the time of copying from the ordinary original and copying can be made. Since the slide projector 1 is positioned at this time outside the range of movement of the original table glass 15, it does not impede the copying operation.

Referring to Figures 1 and 2, the following is a description of a slide projector which constitutes a first embodiment of the present invention and which is arranged to form a white region around a copied image. Figure 2 is a plan view of the slide projector 1 shown in the Figure 1. The slide projector 1 is secured to the copier 14 by a bracket 29. Reference numeral 3 represents a halogen lamp acting as a light source. The rays of light emitted from the halogen lamp 3, which are condensed by an optical condensing system consisting of a reflector 4, condenser lenses 5A, 5B and a heat ray absorption filter 6, illuminate a slide film 9 and are further incident to a projection lens 10. The slide film 9 is held by a slide holder 7. Reference numeral 8 represents a motor for moving the slide holder 7 and engages with the slide holder 7 through a reduction mechanism such as gears not shown in the drawings. The projection lens 10 forms the image of the slide film 9 on a photosensitive film 100 and exposes it. A mirror unit 2 engages with, and is positioned near to, an open portion of the copier 14. A turn-down mirror 13 is disposed on the mirror unit 2 and turns down and irradiates the rays of light from the projection lens 10 onto the photosensitive film 100. Reference numerals 11A and 11B represent lenses, and reference numerals 12A and 12B represent mirrors, which guide and direct the rays of light emitted from the halogen lamp 3 onto the portions W outside the image exposure range P of the photosensitive film 100. The arrangement or focal length of these lenses 11A, 11B may be such as to project, in enlargement, the filament image of the halogen lamp 3 onto the photosensitive film 100, or they may be such that the halogen lamp 3 is positioned at the focal points of the lenses 11A, 11B and the rays of light reaching the photosensitive film 100 become substantially a parallel pencil of rays. In Figure 2, the turn-down of the optical path by the turn-down mirror 13 is omitted, but in practice the rays of light reflected by the mirrors 12A, 12B are turned down by the turn-down mirror 13 in the same way as the rays of light emitted from the projection lens 10, and then reach the photosensitive film 100.

Next, the copying operation involving the use of the slide film 9 will be explained. The slide film 9 held by the slide holder 7 is first moved down to an initial position. Next, the slide film 9 is moved upward in Figure 2 at a constant speed in synchronism with the start of the transfer of the photosensitive film 100. The motor 8 for moving the slide film 9 is driven so that the slide film 9 moves at a predetermined speed in synchronism with the transfer speed of the photosensitive film 100 in accordance with a sync signal which is sent from the copier 14. After scanning of one surface is complete, the slide film 9 is replaced by another slide film or, in the case of a plurality of copies,it is returned to the initial position to repeat the copying operation described above. On the other hand, the copy image can be obtained from the exposed photosensitive film 100 through the same processes as that of an ordinary original copy that have already been described.

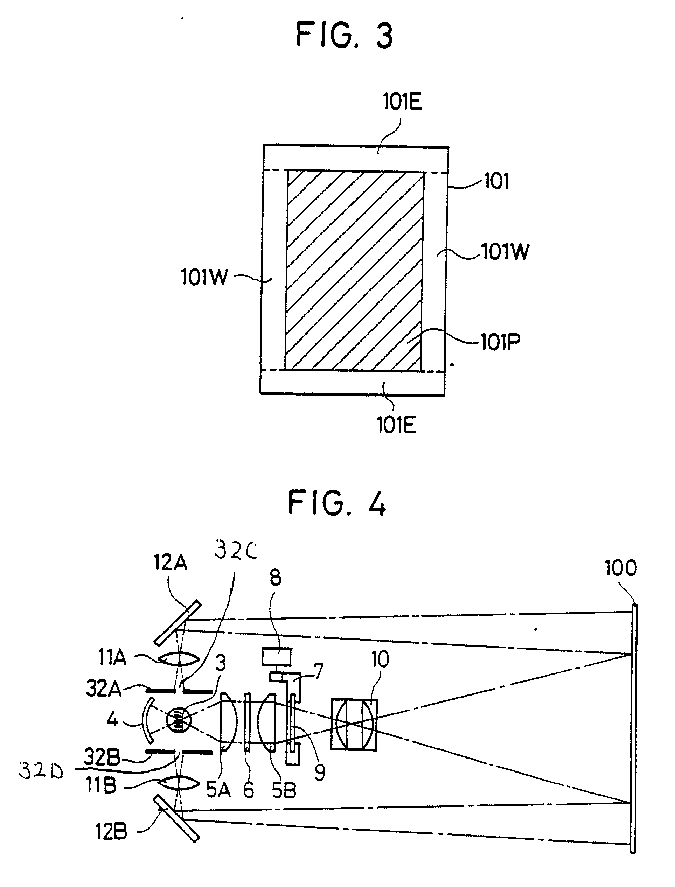

Figure 3 is an explanatory diagram showing the transfer sheet 101 after copying. Symbol 101 P represents the portion which is transferred from the latent image formed on the photosensitive film 100 by the rays of light emanating from the projection lens 10, and the enlarged image of the slide film 9 is formed there. Symbols 101 W, 101 W represent the white colour portions, which correspond to the portions W exposed by the rays of light from the mirrors 12A, 12B on the photosensitive film 100 as shown in Figure 2. The microcapsules are cured completely at the portions W of the photosensitive film which are sufficiently exposed and when the sheet passes thereafter in contact with the development roller 20, the pigment precursors do not flow out onto the transfer sheet 101 so that the portions 101 W of the transfer sheet 101 becomes white in colour. Symbols 101 E, 101 E represent the portions to which no pressure is applied at the time of the passage in contact with the development roller 20, and they are white in colour. The width of the portion 101 E can be set freely by controlling the press timing when the transfer sheet 101 passes in contact with the development roller 20.

Figure 4 is a schematic illustration showing a second embodiment of the present invention. In the drawing, reference numerals 32A and 32B represent sheets or aperture members having apertures 32C, 32D, respectively which are disposed between the halogen lamp 3 and the lenses 11A, 11B, respectively. The lenses 11A and 11B are so disposed as to form images of the apertures 32C, 32D on the photosensitive film 100. In the first embodiment shown in Figure 2, the reflected rays of light around the halogen lamp 3 are also incident on the lenses 11A, 11B and consequently, some leaking rays of light reach the image range P of the photosensitive film 100. However, in this second embodiment, the presence of leaking rays of light in the image range can be eliminated.

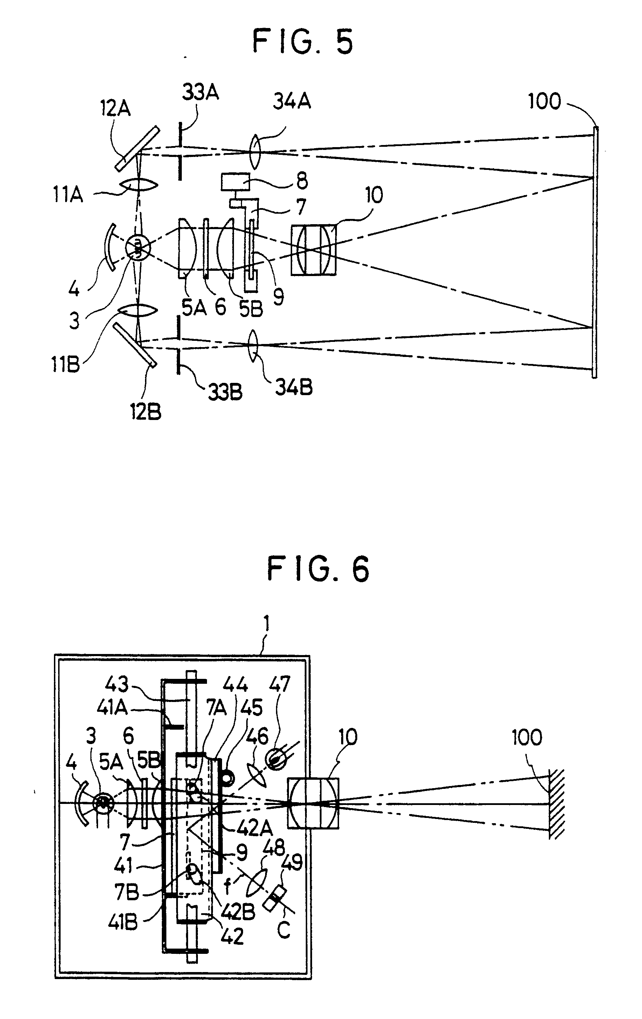

Figure 5 is a schematic illustration showing a third embodiment of the present invention. In this embodiment, between the mirrors 12A, 12B and the photosensitive film 100 there are aperture members 33A and 33B and second lenses 34A and 34B so that among the rays of light condensed by the lenses 11A, 11B, unnecessary rays of light are eliminated by the aperture members 33A, 33B. According to this embodiment, the leaking rays of light in the image range can be eliminated and a better optical quantity can be obtained than in the second embodiment.

Figures 6 to 10, show a fourth embodiment of a slide projector according to the present invention having an automatic focus adjustment means and an automatic sensing means for sensing the existence of the slide film.

As shown in Figure 6, a projector 1 is mounted on a copier (not shown in Figure 6). The rays of light emitted from a halogen lamp 3, which are condensed by an optical condensing system consisting of a reflector 4, condenser lenses 5A, 5B and a heat ray absorption filter 6, illuminate a slide film 9 and are further incident on a projection lens 10. The slide film 9 is inserted into and held by a slide holder 7. A driving gear 45, which is for moving the slide holder 7, is rotated by a motor and a wheel train mechanism that are not shown, and meshes with a rack 44. The rack 44, which is fixed to a holder frame 42, converts the rotary motion of the driving gear 45 into linear motion and moves the holder frame 42 up and down. The holder frame 42 is mounted slidably on a guide shaft 43 which is fixed to a guide base 41. The guide base 41 is provided with stoppers 41A and 41B that strike the upper and lower ends of the slide holder 7, respectively, and restrict the operative range of the slide holder 7. Elongated holes 42A, 42B formed obliquely in the holder frame 42, and guide pins 7A, 7B projecting from the slide holder 7, mesh slidably with one another. The guide pins 7A, 7B are held at arbitrary positions within a range of movement determined by the elongated holes 42A, 42B by means of a frictional holding means consisting of a friction plate and a spring that are not shown in the drawings. In other words, the slide holder 7 is connected to the holder frame 42 at an arbitrary position within the said range of movement.

A light emission element 47 forms an image on the slide film 9 by means of a projection lens 46. A two-part light reception element 49 is constituted by a single photodiode having two photo-sensing areas 49A and 49B or by two single photodiodes arranged together. The image of the light emission element 47 formed on the slide film 9 is reflected by the latter, and the reflected rays f are condensed on the two-part light reception element 49 by a light reception lens 48. The centre C of the two-part light reception element 49 is aligned with the centre of the luminous flux of the reflected rays of light f when the slide film 9 is at a target focal point. The image of the slide film 9 which is focus-adjusted is formed on the surface of the photosensitive film 100 by the projection lens 10. The ratio of the speeds of movement of the slide film 9 and the photosensitive film 100 is equal to the magnification ratio of the projection lens 10.

The operation of the Figure 6 embodiment will now be explained. When the driving gear 45 is rotated clockwise as seen in Figure 6 through the motor and the wheel train mechanism not shown in Figure 6, the rotary motion is converted to vertical motion by the rack 44 and the holder frame 42 moves upward as seen in Figure 6. Since the slide holder 7 is connected frictionally by the said frictional holding means to the holder frame 42 as described already, it rises with the holder frame 42 until the upper end of the slide holder 7 strikes the stopper 41A. If the slide film 9 is inserted into the slide holder 7 at this time, the halogen lamp 3 is lit and the image of the slide film 9 is formed and exposed on the photosensitive film 100.

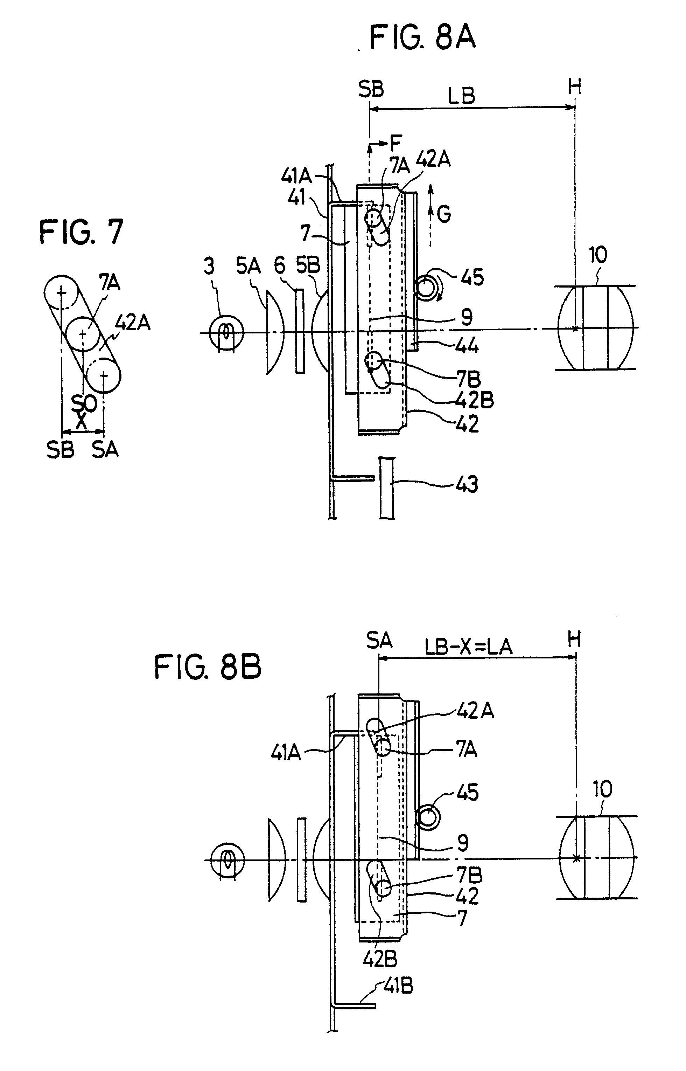

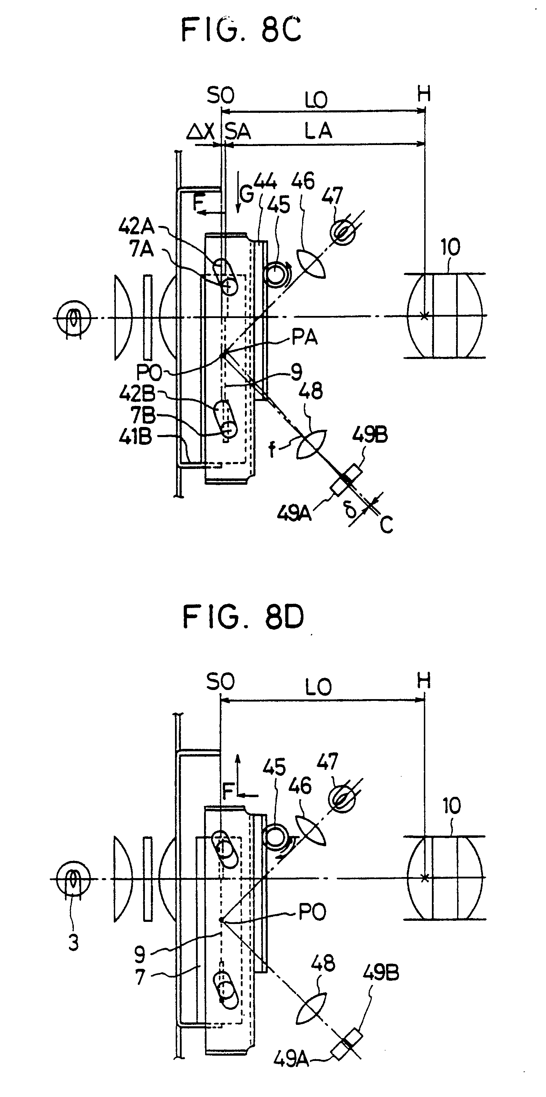

The guide pins 7A, 7B of the slide holder 7 move transversely by a distance X, as shown in Figure 7, between SA and SB along the elongated holes 42A, 42B with the vertical movement of the holder frame 42. The distance between the slide film 9 and the principal point H of the projection lens 10, as shown in Figure 8A, is LB when the guide pins 7A, 7B are positioned at the point SB (Figure 7) of the elongated holes 42A, 42B, and is LA (Figure 8B) when the guide pins 7A, 7B are positioned at the point SA of the elongated holes 42A, 42B. The target focal length LO (Figure 8C) from the slide film 9 to the principal point H of the projection lens 10 is in between LA and LB. In other words, it is arranged that the guide pins 7A, 7B are substantially at the centre of the distance of movement X in the transverse direction in Figure 7 along the elongated holes 42A, 42B. Accordingly, LO plus X/2 is about LB; LO minus X/2 is about LA.

A description will now be given on the assumption that the guide pins 7A, 7B of the slide holder 7 are at the position SB of the elongated holes 42A, 42B of the holder frame 42 as shown in Figure 7. At this time, the position of the slide film 9 is at a position spaced apart by the distance LB from the principal point H of the projection lens 10 as shown in Figure 8A and is greater by about X/2 than the target focal length LO. The value LB changes with any warping of the slide film 9 or with the thickness of the mount. Needless to say, no functional problem occurs at whichever point the guide pins 7A, 7B may be positioned between SA and SB.

When the holder frame 42 keeps rising in the direction of the arrow G (Figure 8A) after the upper end of the slide holder 7 comes into contact with the stopper 41A, the guide pins 7A, 7B move to the position SA of the elongated holes 42A, 42B and the slide holder 7 moves in the direction of the arrow F and is set on the side of the projection lens 10 as shown in Figure 8B. At this time the position of the slide film 9 is spaced apart by the distance LA from the principal point H of the projection lens 10 and is smaller by about X/2 than the target focal length LO. The value LA changes with any warping of the slide film 9 and the thickness of the mount.

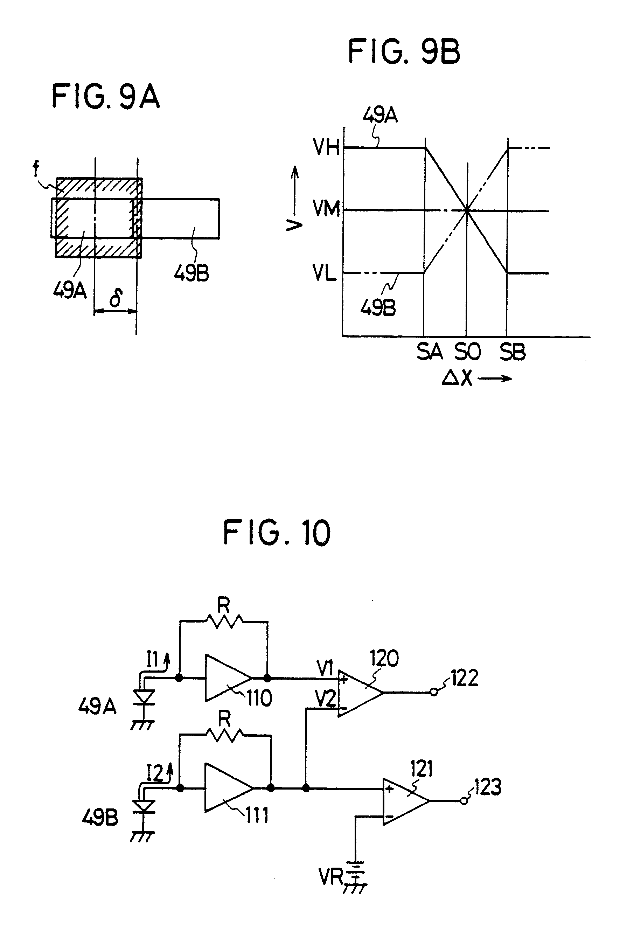

After the slide film 9 is inserted into the slide holder 7, the driving gear 45 is rotated counter-clockwise and the holder frame 42 is lowered until the lower end of the slide holder 7 comes into contact with the stopper 41B as shown in Figure 8C. After the lower end of the slide holder 7 comes into contact with the stopper 41B, the light emission element 47 is lit and the light from the light emission element 47 is projected onto the slide film 9 through the projection lens 46. The reflected rays of light f is condensed by the light reception lens 48 onto the two-part light reception elements 49A, 49B. At this time the slide film 9 is at a position which is at the distance LA from the principal point H of the projection lens 10 and moves by ΔX from the target focal length LO. The value ΔX changes with any warping of the slide film 9 and the thickness of the mount. The image formation point of the light emission element 47 in these circumstances is positioned at PA and the centre of luminous flux of its reflected rays of light f deviates by o towards the side 49A with respect to the centre C of the two-part light reception elements 48A, 48B as shown in Figure 9A.

The output change of the two-part light reception elements 48A, 48B with respect to the displacement ΔX of the slide film 9 will be explained with reference to Figures 9A and 9B. The displacement ΔX is equivalent to on the two-part light reception element 49. It will be assumed that the maximum output voltage of the two-part light reception elements 49A, 49B is VH, respectively, the minimum output is VL and the value when the outputs of 49A, 49B become equal to each other between them is VM. In the condition shown in Figure 8C, the outputs V of the two-part light reception elements 49A, 49B have the relationship

$V_{49A} > V_{49B}$ because the displacement $\Delta X$ is at the point SA. If, at this time, the outputs of the elements 49A, 49B are both below VL, or if $V_{49A} < V_{49B}$, the operation is stopped on the assumption that the slide film 9 is not inserted or the apparatus is out of order.

When the insertion of the slide film 9 is detected automatically, the guide pins 7A, 7B of the slide holder 7 move by the distance $\Delta X$ towards SB along the elongated holes 42A, 42B of the holder frame 42 with consequent lowering of the holder frame 42. The output voltage of the element 49A changes from VH to VL while the output voltage of the element 49B changes from VL to VH. When the slide film 9 reaches the target focal point SO as shown in Figure 8D, the image formation point of the light emission element 47 moves from PA to PO. The centre of luminous flux of the reflected rays of light f is in coincidence with the centre C of the two-part light reception elements 49A,, 49B. Their outputs become equal to each other, and the value at this time is assumed to be VM. In this condition, an adjustment is made in advance so that the distance between the slide film 9 and the principal point H of the projection lens 10 is equal to the target focal length LO, as described already. Therefore, the focus can be adjusted automatically even when any warping of the slide film 9 occurs or the thickness of the mount changes. The driving gear 45 is rotated clockwise as shown in Figure 8D after the outputs of the two-part light reception elements 49A, 49B become equal to each other and the holder frame 42 and the slide holder 7 are raised through the rack 44. If the halogen lamp 3 is lit at this time, the image of the slide film 9 is incident on the projection lens 10 and is exposed on the photosensitive film 100.

If the slide film 9 is not inserted, the reflected rays of light f are not generated even when the lower end of the slide holder 7 strikes the stopper 41B and the light emission element 47 emits the light. Therefore, the rays of light are not condensed by the light reception lens 48 on the two-part light reception element 49. Accordingly, current from the elements 49A, 49B does not flow and is not converted to voltage by a current-voltage converter 110, 111 as shown in Figure 10. In this way, non-insertion of the slide film 9 is detected automatically. For this reason the driving operation of the slide holder 7 is stopped.

Figure 10 is a block circuit diagram of the means for automatic detection of the slide film 9 and the means for automatic focus adjustment. The two-part light reception elements 49A, 49B generate photo-currents 11 and 12, respectively, when the elements 49A, 49B receive the reflected light. The output currents 11, 12 are converted to voltages V1, V2 by the current-voltage converters 110, 111, respectively. The voltages V1 and V2 are compared by a comparator 120 and if V1 is greater than V2, for example, the comparator 120 outputs a signal which produces the automatic focus adjustment. If the value of V2 is smaller than an arbitrary value $V_R$ when it is compared by a comparator 121 after being converted to the voltage from the current, the comparator 121 outputs a judgement signal indicating the absence of the slide film 9. Although the comparison is made in this case with respect to the V2 value, it may alternatively be made with respect to V1 without any problem.

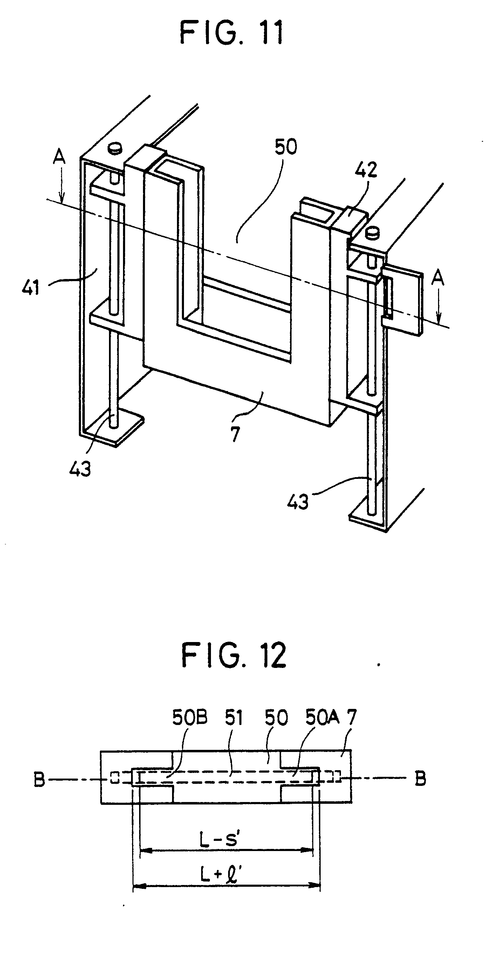

Figures 11 to 21 show a fifth embodiment of a slide projector according to the present invention in which there are means for centering the slide holder 7.

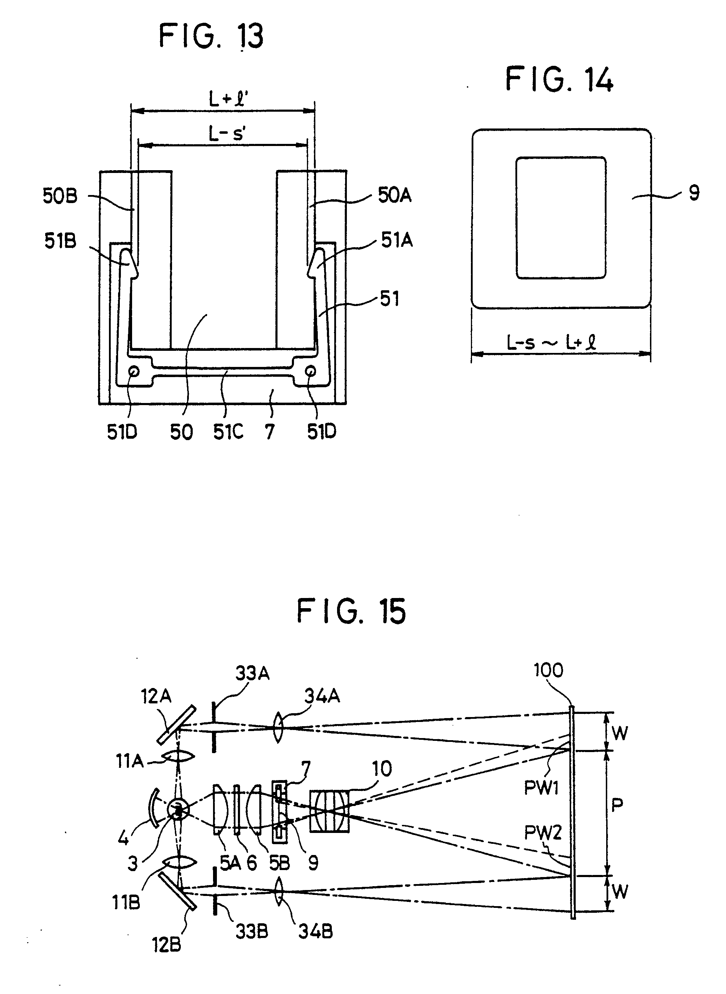

As shown in Figure 11, the slide film 9 is inserted into a slide film holding part 50 of the slide holder 7. The part 50 has channels 50A and 50B into which the slide film 9 is inserted, the channels 50A, 50B being shown respectively on the left and right hand sides of Figure 12. A slide lever 51 is attached to the channels 50A and 50B internally. As shown in Figure 13, the slide lever 51 has end portions 51A and 51B, a connecting portion 51C, and two fulcrums 51D. The end portions 51A and 51B project inwardly from the edges of the channels 50A and 50B and are supported by the slide holder 7 so that the end portions 51A, 51B are freely movable about the fulcrums 51D as the centres of rotation. When the end portions 51A and 51B are pushed away from each other, a moment having the fulcrums 51D as rotation centres is produced by a righting force produced by the connecting portion 51C, because the connecting portion 51C has a resilient characteristic. The righting force of the connecting portion 51C pushes the end portions 51A and 51B to the centre as seen in Figure 13.

The width L of the slide film 9 shown in Figure 14 ranges from L - S to L + $\ell$ . Accordingly, the size L + $\ell'$ of the space between the channels 50A and 50B is larger than L + $\ell$; and the size L - S$'$ of the space between the end portions 51A and 51B is smaller than L - S. This covers the range of the width of the slide film 9, and enables the slide film 9 to be retained in the slide holder 7.

Figure 15 illustrates the exposure region when the slide film 9 is placed out of centre in the slide holder 7. The slide projector must form both the image exposure range P, and the portions W outside the range P, in the correct positions on the photosensitive film 100. The dotted lines, however, indicate another image exposure region which occurs if the slide film 9 is not placed in the centre of the slide film holding part 50. The photosensitive film 100 has an image exposure region PW1 which is overlapped by a white exposure portion W shown by the respective dotted line, and a non-exposure region PW2 in which part of the image is missing.

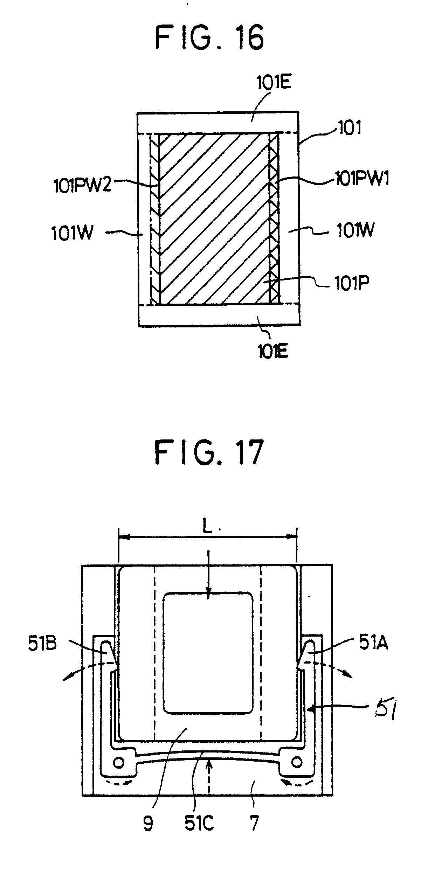

Figure 16 shows the transfer sheet 101 after copying in the case of slide film 9 placed out of centre in the slide holder 7 as shown in Figure 15. The copied transfer sheet 101 has an overlapped exposure region 101 PW1 which corresponds to the portion PW1 on the photosensitive film 100, and a non-exposure region 101 PW2 which corresponds to the portion PW2 on the photosensitive film 100.

Next, the operation of centering will now be described.

Figure 17 shows the operation when the slide film 9 is inserted into the slide holder 7. Inserting the slide film 9 into the channels 50A and 50B of the slide holder 7 pushes the end portions 51A and 51B of the slide lever 51 to the left and right as seen in Figure 17. The righting force of the elasticity of the connecting portion 51C works on the end portions 51A and 51B to hold the slide film 9 in the slide lever 51. At this time, the force of the end portions 51A and 51B makes no difference owing to the fact that both of them is subject to the righting force of the connecting portion 51C. Thus, the slide film 9 is held in the centre of the slide holder 7 due to the equal forces imposed by the end portions 51A and 51B even if there is a variation in the width L of the slide film 9.

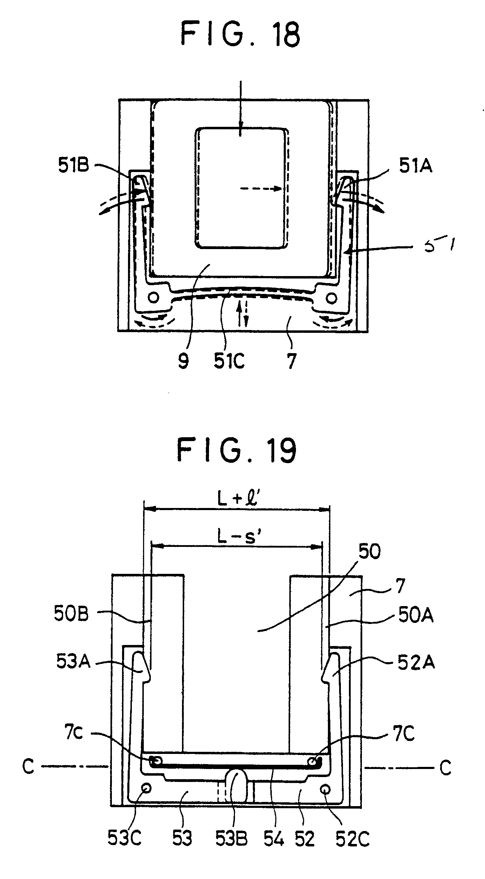

The following is a description of the case in which the slide film 9 is inserted nearer to one of the channels 50A or 50B in the slide holder 7 than to the other. Thus in Figure 18 the slide film 9 is inserted nearer to the channel 50B. In this case, the end portion 51B of the slide lever 51 is pushed to the left by the slide film 9. The righting force exerted by the elasticity of the connecting portion 51C works on the end portion 51B to push the slide film 9 back to the centre of the slide holder 7. At this time, the end portion 51A connects with the connecting portion 51C so that the said force causes the end portion 51A to move to the right as seen in Figure 18 in the same manner as the end portion 51B and this causes the end portion 51A to be separated from the slide film 9. Therefore, the end portion 51A does not move the slide film 9 back to the centre of the slide holder 7, and only the force of the end portion 51B acts on the slide film 9 so as to cause it to be pushed back to the centre of the slide holder 7. After that, the end portion 51A starts to push the slide film 9 gradually, the forces exerted by the end portions 51A and 51B on the slide film are stabilized in the balanced condition. Since the end portions 51A and 51B are both subject to the righting force of the connecting portion 51C, the force of the end portions 51A and 51B will always be equal. Consequently, the slide film 9 automatically becomes positioned in the centre of the slide holder 7, even if the slide film 9 is introduced into the side holder 7 away from the centre of the slide holder 7. Although this embodiment employs a slide lever constituted by one integral structure, it may alternatively be formed of a plurality of parts as shown in Figures 19-21.

Figure 19 shows a sectional view of a slide holder 7 which is used in a sixth embodiment of the present invention. Slide levers 52, 53, and a plate spring 54 are attached to the channels 50A and 50B internally in the slide holder 7. The slide levers 52 and 53 have end portions 52A, 53A, active points 52B, 53B (Figure 20), and fulcrums 52C, 53C respectively. The active points 52B and 53B are placed at the centre of the slide holder 7 and are aligned so as to contact the centre of the plate spring 54. The plate spring 54 resiliently engages both spring holders 7C which project from the slide holder 7 and the active points 52B, 53B of the slide levers 52 and 53. The slide levers 52 and 53 have their end portions 52A and 53A projecting out from the edges of the channels 50A and 50B, the end portions 52A, 53A being movable about the fulcrums 52C and 53C in the slide holder 7. The distance between the channels 50A and 50B, and the distance between the end portions 52A and 53A, corresponds to those described above in relation to the embodiment of Figure 13.

Figure 20 shows active points 52B and 53B of the slide levers 52 and 53. The forces exerted by the end portions 52A and 53A are equal due to the equality of the forces acting on both slide levers 52 and 53.

Figure 21 illustrates the case in which the slide film 9 has been inserted close to the channel 50B. The end portion 53A is pushed to the left as seen in Figure 21 by the slide film 9, so that the slide lever 53 moves counter-clockwise about the fulcrum 53C. The active point 53B causes the plate spring 54 to flex upwardly as seen in Figure 21. The righting force of the plate spring 54 arising from its elasticity operates on the active point 53B so that the end portion 53A produces the force required to push the slide film 9 back to the centre of the slide holder 7. At this time, since the plate spring 54 is separated from the active point 52B, the slide lever 52 becomes free, and there is no force acting on the end portion 52A to push the slide film 9 back to the centre of the slide holder 7. Thus, the righting force of the plate spring 54 is transferred only to the slide lever 53, and the slide film 9 is moved by this force back to the centre of the slide holder 7. Consequently, the slide lever 53 moves clockwise, and the plate spring 54 moves down with the righting force as seen in Figure 21. After this movement of the slide film 9, as the end portion 52A is pushed by the slide film 9 to the right as seen in Figure 21, the slide lever 52 moves clockwise. The active point 52B moves upwardly as seen in Figure 21 to contact the plate spring 54. At this time, the pushing forces of the end portions 52A and 53A are balanced and stabilized. The slide levers 52 and 53 are subjected to the same forces, so that the slide film 9 is automatically set at the centre of the slide holder 7.

Although each of the embodiments of Figures 6-10, 11-18 and 19-21 has been described as complete in itself it is to be understood that each of these embodiments may be used in any slide projector which comprises a slide holder 7, a light source 3 for illuminating a slide film 9 held in the slide holder 7, and light directing means 10 for directing light from the slide film 9 onto the photosensitive film 100 so as to expose the latter to such light. Consequently, each or all of these embodiments may be used in a slide projector as shown in Figures 1-2, Figure 4 or Figure 5.

Embodiments of the present invention described above, enable the light sources that have previously been used for forming a white color trim around a copy image from a slide to be eliminated, with the result that the reliability of the apparatus can be improved and the power consumed can be reduced.

Thus cables for supplying power from the slide projector main body to the mirror unit become unnecessary, so enabling an easy-to-operate slide projector to be provided.

The slide can be moved in the direction of the optical axis with the result that a driving source and a driving mechanism for automatic focus adjustment become unnecessary and it becomes possible to simplify the apparatus and to improve its reliability.

Even when the user does not notice that a slide has not been inserted and starts the copying operation, the existence or absence of the slide can be detected automatically before the automatic focus adjustment. Accordingly, it is possible to let the user know that the slide is not inserted, through the operation panel of the copying machine or the like.

Furthermore, the difficulty of effecting focus adjustment of the projected image by eye can be eliminated so that a clear image can be obtained. This enables the reliability of the slide projector to be improved.

Furthermore, when the slide film is inserted into the slide holder, as the slide film can be moved automatically to a predetermined setting position of the slide holder, the entire image can be projected without parts missing. The image can be projected at the centre of the output paper despite the size of the image of the slide film. This prevents the slide film from remaining in an oblique position in the slide holder even if the slide film is inserted obliquely. Further, the construction of the slide holder may be simple and capable of miniaturization. A user does not have to check whether the slide film has been inserted, and this permits ease of handling.

Although in the foregoing embodiments reference has been made to a photocopier using a photosensitive film, the present invention can also be applied to an electrophotograph type copier and to a printer having an input device, like a CCD.

The slide projector main body and the mirror unit may either be separate units as described above or they may be integrated when higher optical accuracy is required.

Although reference has been made in the foregoing embodiments to a copier to which the slide projector is to be fitted and which uses a refractive index distribution rod, the present invention can also be applied to a copier of the type which uses a spherical lens.

## Claims

1. A slide projector for projecting an image of a slide film (9) onto an image-receiving member (100), comprising holding means (7) for holding a slide film (9); a light source (3) for illuminating a slide film (9) held by said holding means (7); and first light directing means (10) for directing light from the slide film (9) onto a first region (P) of the image-receiving member (100), characterised by second light directing means (11A, 11B, 12A, 12B) for exposing at least one second region (W) of the image-receiving member (100) to light from said light source (3) which has not passed through said slide film (9).

2. A slide projector as claimed in claim 1 characterised in that the second light directing means (11A, 11B, 12A, 12B) comprises lens means (11A, 11B) for condensing light from said light source (3), and mirror means (12A, 12B) for reflecting light which has been condensed by said lens means (11A, 11b) onto the or each said second region (W).

3. A slide projector as claimed in claim 2 characterised by aperture means (32A, 32B) through which light from the light source (3) passes to the lens means (11A, 11B).

4. A slide projector as claimed in claim 2 or 3 characterised by second aperture means (33A, 33B) and second lens means (34A, 34B) through which the light reflected by the mirror means (12A, 12B) is directed onto the or each said second region (W).

5. A slide projector as claimed in any preceding claim characterised by adjusting means (7A, 7B, 42A, 42B, 44, 45, 49) for automatically adjusting the position of a slide film (9) held by said holding means (7) so as to ensure that the image thereof which is directed onto the image-receiving member (100) is in focus.

6. A slide projector as claimed in claim 5 characterised in that the adjusting means (7A, 7B, 42A, 42B, 44, 45, 49) comprises illuminating means (47) for directing light onto a slide film (9) held by said holding means (7); measuring means (49) for measuring the amount of light from the illuminating means (47) which is reflected from the slide film (9); and moving means (7A, 7B, 42A, 42B, 44, 45) for moving said holding means (7) towards and away from the light source (3) in dependence upon the amount of light measured by the measuring means (49).

7. A slide projector as claimed in any of claims 1-4 characterised by detecting means (47,49) for detecting whether a slide film (9) is present in the holding means.

8. A slide projector as claimed in claim 7 characterised in that the detecting means (47,49) comprises illuminating means (47) for directing light onto a slide film (9) held by said holding means (7); and light responsive means (49) responsive to light from the illuminating means (47) which is reflected from the slide film (9).

9. A slide projector as claimed in any preceding claim characterised by centering means (51) for setting the slide film (9) at the centre of the holding means (7).

10. A slide projector as claimed in claim 9 in which the centering means (51) has slide film engaging portions (51A, 51B) which are adapted to nip the slide film (9) between them.

11. A slide projector as claimed in claim 10 in which the centering means (51) has a resilient portion (51C) which urges the slide film engaging portions (51A, 51B) towards each other.

12. A slide projector comprising holding means (7) for holding a slide film (9), and means (3,10) for projecting an image of a slide film (9) held in the holding means (7) onto an image-receiving member (100) characterised by adjusting means (7A, 7B, 42A, 42B, 44, 45, 49) for automatically adjusting the position of a slide film (9) held by said holding means (7) so as to ensure that the image thereof which is projected onto the image-receiving member (100) is in focus.

13. A slide projector comprising holding means (7) for holding a slide film (9), and means (3,10) for projecting an image of a slide film (9) held in the holding means (7) onto an image-receiving member (100) characterised by detecting means (47,49) for detecting whether a slide film (9) is present in the holding means (7).

14. A slide projector comprising holding means (7) for holding a slide film (9), and means (3,10) for projecting an image of a slide film (9) held in the holding means (7) onto an image-receiving member (100) characterised by centering means (51) for setting the slide film (9) at the centre of the holding means (7).

15. A slide projector projecting an image of a slide film on a photosensitive film comprising: a light source for illuminating said slide film; holding means for holding said slide film therein; first exposure means for exposing a first region of the photosensitive film to light outputted from said light source through said slide film; and second exposure means for exposing a second region outside said first region of the photosensitive film to light outputted from said light source without passing through said slide film.

16. A slide projector projecting an image of a slide film on a photosensitive film comprising: a light source for illuminating said slide film; holding means for holding said slide film therein; exposure means for exposing a region of the photosensitive film to light outputted from said light source through said slide film; and adjusting means for adjusting automatically a position of said slide film in which an image exposed on the photosensitive film is in focus.

17. The slide projector of claim 16, further comprising a moving means for moving the holding means to illuminate part of said slide film in sequence.

18. The slide projector of claim 17, wherein the moving means converts the moving of slide film into the direction of optical axis.

19. A slide projector projecting an image of a slide film on a photosensitive film comprising: a light source for illuminating said slide film; holding means for holding said slide film therein; exposure means for exposing a region of the photosensitive film to light outputted from said light source through said slide film; and detecting means for detecting automatically an existence of said slide film in the holding means.

20. A slide projector projecting an image of a slide film on a photosensitive film comprising: a light source for illuminating said slide film; holding means for holding said slide film therein; centering means provided in the holding means for setting said slide film in the center of the holding means; and exposure means for exposing a region of the photosensitive film to light outputted from said light source through said slide film.

# FIG. 1

# FIG. 2

# FIG. 3

# FIG. 4

EP 0 398 518 A2

# FIG. 5

# FIG. 6

EP 0 398 518 A2

FIG. 7

FIG. 8A

FIG. 8B

# FIG. 8C

# FIG. 8D

FIG. 9B

FIG. 9A

FIG. 10

# FIG. 11

# FIG. 12

## FIG. 13

## FIG. 14

## FIG. 15

# FIG. 16

101E

101

101PW2

101PW1

101W

101W

101P

101E

# FIG. 17

L

51B

51A

51

9    51C    7

# FIG. 18

51B    51A

5-1

9   51C   7

# FIG. 19

$L + \ell'$

$L - s'$

50

7

50B    50A

53A    52A

7C    7C

C — — — C

53C   53   53B   54   52   52C

# FIG. 20

52B 52 52C

53C 53 53B 7

# FIG. 21

9
7
53A 52A
53C 53 53B 52

# FIG. 22 PRIOR ART

31A 100
30A
8
4 3 7 10 W
P
5A 6 5B 9
30B W
31B